# EUROPÄISCHE PATENTSCHRIFT

(11) **EP 0 741 927 B1**
(45) Veröffentlichungstag und Bekanntmachung des Hinweises auf die Patenterteilung: **27.05.1998**
(21) Anmeldenummer: 95905481.8
(22) Anmeldetag: 24.01.1995
(51) Int. Cl.: H02H 3/33, H02H 1/06

(54) **DIFFERENZSTROMSCHUTZSCHALTER**
RESIDUAL CURRENT SAFETY SWITCH
DISJONCTEUR DE PROTECTION A COURANT DIFFERENTIEL RESIDUEL

(30) Priorität: 24.01.1994 AT 126/94
(43) Veröffentlichungstag der Anmeldung: 13.11.1996
(73) Patentinhaber: EH-Schrack Energietechnik GmbH, A-1235 Wien (AT)
(72) Erfinder: BACHL, Hubert, A-1170 Wien (AT)
(74) Vertreter: Gibler, Ferdinand, Dipl.Ing. Dr. techn.
(86) Internationale Anmeldenummer: AT9500012
(87) Internationale Veröffentlichungsnummer: WO9520257

(56) Entgegenhaltungen:
- EP-A- 0 633 640
- DE-A- 3 528 702
- GB-A- 2 244 398

## Beschreibung

Die Erfindung bezieht sich auf einen Differenzstromschutzschalter gemäß dem Oberbegriff des Anspruches 1.

Bei bekannten derartigen Differenzstromschutzschaltern (im weiteren kurz "DI-Schalter" genannt) erfolgt die Spannungsversorgung der Elektronik über einen Hilfskontakt entweder vor dem Differenzstromwandler oder nach dem Differenzstromwandler. Der Nachteil dieser Lösung besteht darin, daß die Elektronik selbst, sowie der zugehörige Überspannungsschutz ungeschützt sind, und es bei überhöhter Netzspannung zu einem Defekt dieses Schutzes bzw. bei einem Defekt in der Spannungsversorgung der Elektronik zu einem Ausfall derselben kommen kann, ohne daß ein derartiger Defekt von außen erkannt wird.

Ziel der Erfindung ist es, diese Nachteile zu vermeiden, und einen DI-Schalter der eingangs erwähnten Art vorzuschlagen, der sowohl den eingebauten Überspannungsschutz wie auch den Spannungsversorgungskreis der Elektronik selbst schützt.

Erfindungsgemäß wird dies bei einem Differenzstromschutzschalter der eingangs erwähnten Art durch die kennzeichnenden Merkmale des Anspruches 1 erreicht.

Durch diese Maßnahmen wird erreicht, daß es bei Auftreten von statischen Überspannungen, von zu hoher Netzspannung, oder bei einem Defekt der Spannungsversorgung der Elektronik zu einer Aktivierung der Auslöseeinrichtung kommt. Dadurch ist der Differenzstromschutzschalter in der Lage, sich bei bestimmten Defekten oder Überlastungen der Elektronik selbst vom Netz zu trennen, und es entfällt damit weiters die Gefahr, daß ein Nichtfunktionieren des Schalters unter bestimmten Voraussetzungen unbemerkt bleibt.

Durch die Merkmale des Anspruches 2 ergibt sich weiters der Vorteil, daß die Empfindlichkeit der Überspannungsschaltung in weiten Bereichen eingestellt werden kann, ohne einen wesentlichen Einfluß auf die Auswerteschaltung zu haben, wobei die verbleibende Beeinflussung bei der Auslegung bzw. Dimensionierung der Auswerteschaltung berücksichtigt werden kann.

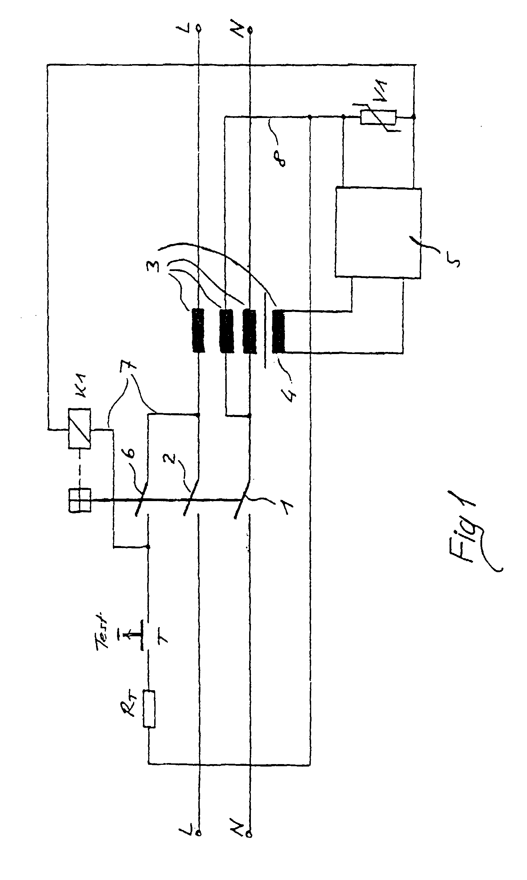

Die Erfindung wird nun anhand der Zeichnungen näher erläutert, wobei die Fig. 1 bis 3 schematisch jeweils verschiedene Ausführungsformen eines erfindungsgemäßen DI-Schalters zeigen.

Der DI-Schalter nach Fig. 1 ist mit den festen Anschlüssen seiner beiden Schaltkontakte 1, 2 mit Netzanschlüssen L, N verbunden. Diesen Schaltkontakten 1, 2 ist ein Differenzstromwandler 3 nachgeschaltet, dessen Sekundärwicklung 4 mit der Auswerteschaltung 5 verbunden ist, und die einen allfälligen differenzstrombedingten Sekundärstrom auswertet.

Die Auswerteschaltung 5 ist mit einer elektromagnetischen Auslöseeinrichtung K1 verbunden, die die Schaltkontakte 1, 2 und einen Hilfskontakt 6 steuert, der die Elektronik unabhängig von Netz- bzw. Verbraucherseite des DI-Schalters vom Netz trennt.

Die Spannungsversorgung der Auswerteschaltung 5 erfolgt über die elektromagnetische Auslöseeinrichtung K 1 sowie über die Leitungen 7 und 8 und den vorgeschalteten Hilfskontakt 6, wobei eine der beiden Leitungen 7 bzw. 8 (in der beiliegenden Skizze Leitung 8) durch den Differenzstromwandler 3 hindurchgeführt wird, bzw. erst nach diesem die Spannung abgreift und die zweite Leitung (Leitung 7 der beiliegenden Skizze) nicht durch den Wandler geführt wird bzw. die Spannung bereits davor abgreift.

Weiters ist parallel zu der Auswerteschaltung ein Überspannungselement V 1 geschaltet.

Dabei ist der spannungsabhängige Widerstand V 1 so bemessen, daß bei Nennspannung, bzw. nur in einem tolerierbaren Ausmaß erhöhter Spannung der über den spannungsabhängigen Widerstand V 1 fließende Strom geringer als der für eine Auslösung erforderliche Differenzstrom ist.

Bei Vorliegen einer Überspannung oder eines Defektes in der Spannungsversorgung der Auswerteschaltung fließt nun ein entsprechender Differenzstrom durch den Wandler 3, der als Fehlerstrom erkannt wird, wodurch es bei Überschreitung eines bestimmten voreinstellbaren Wertes durch die Auswerteschaltung 5 zu einer Aktivierung der Auslöseeinrichtung K 1 kommt.

Dadurch wird aber auch die Versorgung der Auswerteschaltung 5 und damit auch der Überspannungsschutzschaltung, die durch das Überspannungsschutzelement V 1 gebildet ist, unterbrochen und damit eine Schädigung des DI-Schalters bzw. eine Gefährdung der nachfolgenden Installation unterbunden.

Weiters ist ein Widerstand RT, der mit einer Prüftaste T in Serie geschaltet ist, bei geschlossenen Schaltkontakten 1, 2 und damit geschlossenem Hilfkontakt 6, in einer die Leitungen N und L verbindenden Leitung 9 angeordnet. Durch Drücken dieser Taste T fließt über den Widerstand RT und die außerhalb des Differenzstromwandlers 3 verlaufende Leitung 9 ein Differenzstrom, dessen Größe ausreicht, um eine Aktivierung der Auslöseeinrichtung K 1 zu erreichen.

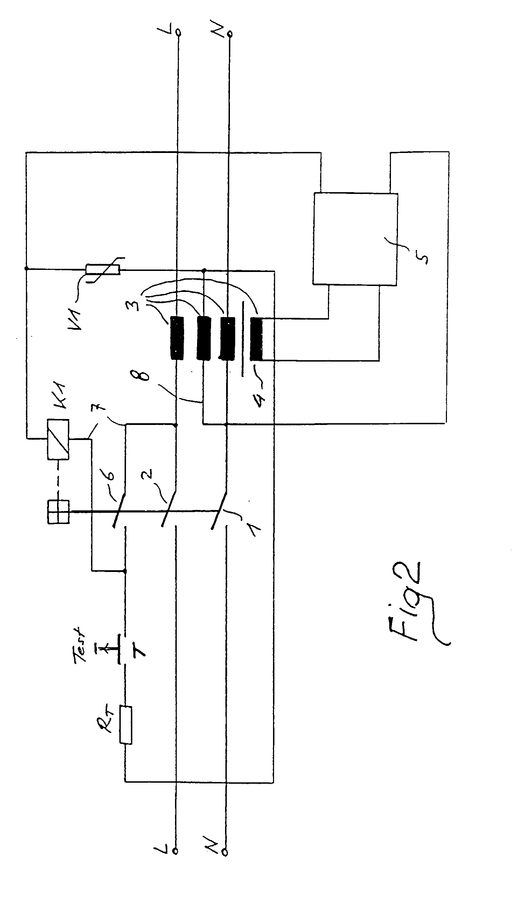

Die Ausführungsform nach der Fig. 2 unterscheidet sich dadurch von jener nach der Fig. 1, daß der spannungsabhängige Widerstand V1 nicht mehr parallel zu den Ausgängen der Auswerteschaltung 5 geschaltet ist; er ist über die elektromagnetische Auslöseeinrichtung K1 mit dem einen spannungsführenden Anschluß L und über die durch den Differenzstromwandler 3 geführte Leitung 8 an dem anderen spannungsführenden Anschluß N angeschlossen. Die Auswerteschaltung 5 wird unabhängig von der durch den Differenzstromwandler 3 geführten Leitung 8 gespeist.

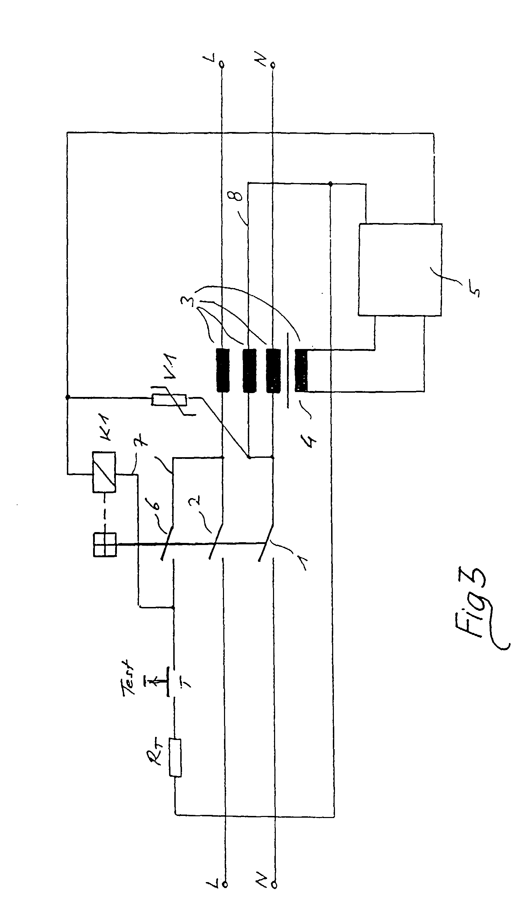

Bei der Ausführungsform nach Fig. 3 sind die Verhältnisse gerade umgekehrt wie bei Fig. 2, indem nur die Auswerteschaltung 5 über die durch den Differenzstromwandler 3 geführte Leitung 8 gespeist wird, nicht jedoch der spannungsabhängige Widerstand V 1.

Die Ausführungsformen nach den Fig. 1 bis 3 unterscheiden sich somit dadurch, daß dann wenn die Schaltkontakte 1, 2 geschlossen sind, über die Leitungen 7, 8 - nach Fig.1 - sowohl die Auswerteschaltung 5 als auch die Überspannungsschutzschaltung V1 mit spannungsführenden Anschlüssen verbunden sind, wohingegen dies gemäß Fig. 2 nur hinsichtlich der Überspannungsschutz-Schaltung V1 und gemäß Fig. 3 nur hinsichtlich der Auswerteschaltung 5 der Fall ist.

## Patentansprüche

1. Differenzstromschutzschalter mit einem Differenzstromwandler (3) und einer mit diesem verbundenen Auswerteschaltung (5), die eine Schaltkontakte (1, 2) betätigende elektromagnetische Auslöseeinrichtung (K1) steuert, wobei eine ÜberspannungsschutzSchaltung (V1), z.B. in Form eines spannungsabhängigen Widerstandes, vorgesehen ist, **dadurch gekennzeichnet**, daß die Auswerteschaltung (5) und/bzw. oder die Überspannungsschutz-Schaltung (V1) über eine durch den Differenzstromwandler (3) hindurchgeführte und eine außerhalb des Differenzstromwandlers (3) geführte Leitung (8, 7) mit bei geschlossenen Schaltkontakten (1, 2) spannungsführenden Anschlüssen verbunden ist bzw. sind und gespeist wird bzw. werden, wobei der Versorgungsstrom der Auswerteschaltung (5) und bzw. oder der über die Überspannungsschutz-Schaltung (V1) fließende Strom bei anliegender Nennspannung unterhalb des Auslösestromes liegt.

2. Differenzstromschutzschalter nach Anspruch 1, **dadurch gekennzeichnet**, daß die Überspannungsschutz-Schaltung (V1) parallel zur Auswerteschaltung (5) geschaltet ist und die Auslöseeinrichtung (K1) in Serie zu dieser Parallelschaltung geschaltet ist.

## Claims

1. Residual current safety switch having a residual current transformer (3) and an evaluation circuit (5) which is connected to the latter and controls an electromagnetic tripping device (K1) which operates switching contacts (1, 2), an overvoltage protective circuit (V1) being provided, for example in the form of a voltage-dependent resistor, characterized in that the evaluation circuit (5) and/or the overvoltage protective circuit (V1) is or are connected and fed via a line (8) which passes through the residual current transformer (3) and by a line (7) which is routed outside the residual current transformer (3) to connections which are live when the switching contacts (1, 2) are closed, the supply current to the evaluation circuit (5) and/or the current flowing via the overvoltage protective circuit (V1) being less than the tripping current when the rated voltage is applied.

2. Residual current safety switch according to Claim 1, characterized in that the overvoltage protective circuit (V1) is connected in parallel with the evaluation circuit (5), and the tripping device (K1) is connected in series with this parallel circuit.

## Revendications

1. Disjoncteur à courant différentiel comportant un transformateur de courant différentiel (3) et un circuit d'exploitation (5) relié à celui-ci qui commande un dispositif de déclenchement électromagnétique (K1) actionnant des contacts de coupure (1, 2), un circuit de protection contre les surtensions (V1), formé par exemple d'une résistance dépendant de la tension, étant prévu, caractérisé par le fait que le circuit d'exploitation (5) et/ou le circuit de protection contre les surtensions (V1) est ou sont relié(s) et alimenté(s) par une ligne (8) traversant le transformateur de courant différentiel (3) et une ligne (7) passant à l'extérieur de celui-ci à des bornes, sous tension lorsque les contacts de coupure (1, 2) sont fermés, le courant d'alimentation du circuit d'exploitation (5) et/ou le courant passant par le circuit de protection contre les surtensions (V1) étant, lorsque la tension nominale est appliquée, inférieur(s) au courant de déclenchement.

2. Disjoncteur à courant différentiel selon la revendication 1, caractérisé par le fait que le circuit de protection contre les surtensions (V1) est monté en parallèle sur le circuit d'exploitation (5) et le dispositif de déclenchement (K1) est monté en série avec ce circuit parallèle.
